# EUROPEAN PATENT APPLICATION

(11) **EP 2 420 923 A2**
(43) Date of publication of application: **22.02.2012**
(21) Application number: 11158383.7
(22) Date of filing: 16.03.2011
(51) Int. Cl.: G06F 3/048, H04N 1/21

(54) **Method and displaying information and mobile terminal using the same**

(30) Priority: 16.08.2010 KR 20100079001; 18.08.2010 KR 20100079961
(71) Applicant: LG Electronics, Seoul, 150-721 (KR)
(72) Inventor: Kim, Minwoo, Incheon (KR); Hong, Yeon Chul, Ansan (KR)
(74) Representative: TER MEER - STEINMEISTER & PARTNER GbR

(57) **Abstract**

A method for controlling information on a mobile terminal may be provided. The method may include displaying an image (at least one object) on a display of the mobile terminal, receiving information regarding movement of a pointer with respect to the displayed image on the display, obtaining augmented reality (AR) information regarding the object based on the received information regarding movement of the pointer, and displaying the image and the augmented reality (AR) information related to the at least one object on the display of the mobile terminal.

## Description

### BACKGROUND

### 1. Field

Embodiments of the present disclosure may relate to a mobile terminal and, more particularly to a method for displaying information and/or a mobile terminal using the same.

### 2. Background

Terminals may include mobile/portable terminals and stationary terminals. The mobile terminals may be categorized as a handheld terminal or a vehicle mount terminal according to whether it is directly portable by a user.

The terminal can capture still images or moving images, play music or video files, play games, receive broadcast and/or the like, so as to be implemented as an integrated multimedia player. Various attempts have been done for the terminal by hardware or software in order to support and implement such complicated functions.

A terminal according to an example arrangement may provide various information regarding real objects to users by using an augmented reality (AR) technique. The AR technique may be applied such that when the terminal provides GPS information and/or terrestrial information to a server, the server may determine a location and/or direction of the mobile terminal based on the provided information and may provide guide information (i.e., AR information) regarding a subject whose image is being captured by a camera of the terminal.

The terminal according to an example arrangement may send a text message or transmit a captured photo image as a way to transfer various information to a counterpart. A terminal user may input characters through a button (keypad), a virtual keypad, and/or the like, and may transmit the same to the counterpart in order to deliver detailed information.

The character input method may include an input method of applying the principle of Hangul, an input method of arranging a keyboard on a keypad and input consonants and vowels of Hangul, and/or the like. For example, the input method of arranging a keyboard on a keypad may be performed such that several consonants and vowels of Hangul may be allocated to respective number keys of a keypad, a key position of a Hangul character desired to be inputted on the keypad is found, and number keys are selectively inputted several times according to a disposition order of consonants and vowels of Hangul.

### SUMMARY

It is an object of the present invention to provide a method and a mobile terminal allowing to provide additional information on a display of a mobile terminal being associated to objects of an image displayed on the display of the mobile terminal.

The object is solved by the features of the independent claims.

The invention is based on the idea to receive additional information from other sources to display such information on the display, to provide a convenient way to easily acquire and provide additional information without manually searching for such information. By this the user is able to select objects or additional information associated to the objects, which is offered automatically.

The object is solved by a method for controlling information on a mobile terminal, comprising: displaying an image on a display of the mobile terminal, the image including at least one object; obtaining augmented reality (AR) information regarding the object based on the received information regarding movement of the pointer; and displaying the image and the augmented reality (AR) information related to the at least one object on the display of the mobile terminal.

The object is solved by a method for controlling information on a mobile terminal, the method comprising: displaying an image on a display of the mobile terminal, the image including a first object, first augmented reality (AR) information associated with the first object, a second object and second AR information associated with the second object; receiving information regarding movement of a pointer with respect to the displayed image on the display; identify the AR information associated with the second object based on the received information regarding movement of the pointer; and displaying, on the display of the mobile terminal, the image with the first object, the second object and the first AR information associated with the first object and without the AR information associated with the second object when the AR information associated with the second object is identified based on the received information regarding movement of the pointer.

Preferably the identifying of AR information includes determining an area of the displayed image based on the movement of the pointer, and determining whether an object is provided within the determined area.

Preferably the identifying of AR information further includes identifying the AR information of the determined object when the object is determined to be provided within the determined area.

Preferably the movement of the pointer includes movement of the pointer over a plurality of predetermined regions of the display and identifying the regions based on the movement of the pointer.

Preferably the displayed second AR information overlaps at least a portion of a front position of the first AR information.

Preferably the method for controlling information on a mobile terminal, further comprising: storing identification information regarding the second object and information regarding whether to display the second AR information, wherein when the second object disappears from the display and is again displayed on the display, the second AR information associated with the second object is displayed or is not displayed based on the stored identification information regarding the second object and stored information regarding whether to display the stored second AR information.

Preferably the method, further comprising transmitting the image with the first object, the second object, and the first AR information to another mobile terminal without transmitting the second AR information.

The object is also solved by a mobile terminal comprising: a display to display an image, the image including at least one object, and a controller to receive information regarding movement of a pointer with respect to the displayed image on the display, the controller to obtain augmented reality (AR) information regarding the object based on the received information regarding movement of the pointer, and the display to display the image and the augmented reality (AR) information related to the at least one object on the display.

Preferably the movement of the pointer includes movement of the pointer over a plurality of predetermined regions of the display, and the controller identifies the regions based on the movement of the pointer over the plurality of predetermined regions.

Preferably the display displays the image and the AR information by displaying the AR information such that the displayed AR information overlaps a portion of a front position of AR information of another object of the image.

Preferably the controller obtains the AR information by obtaining location information of the mobile terminal, an access address to the AR information or identification information of an AR marker associated with the object.

The object is also solved by a mobile terminal comprising: a display to display an image, the displayed image including a first object and a second object, the display to further display first augmented reality (AR) information associated with the first object, and second AR information associated with the second object; and a controller to receive information regarding movement of a pointer with respect to the displayed image on the display, the controller to identify the second AR information associated with the second object based on the received information regarding movement of the pointer, and the controller to control the display to display the image with the first object, the second object and the first AR information associated with the first object and without the second AR information associated with the second object when the second AR information associated with the second object is identified based on the received information regarding movement of the pointer.

Preferably the controller identifies the second AR information by determining an area of the displayed image based on the movement of the pointer, and the controller determines whether an object is provided within the determined area.

Preferably the controller identifies the second AR information further by identifying the second AR information of the determined object when the object is determined to be provided within the determined area.

Preferably the movement of the pointer includes movement of the pointer over a plurality of predetermined regions of the display, and the controller identifies the regions based on the movement of the pointer over the plurality of predetermined regions.

Preferably the display displays the second AR information by displaying the second AR information such that the second AR information overlaps a portion of a front position of the displayed first AR information.

Preferably the mobile terminal, further comprises: a memory to store identification information regarding the second object and information regarding whether to display the second AR information, wherein when the second object disappears from the display and is again displayed on the display, the controller determines whether the second AR information associated with the second object is displayed or is not displayed based on the stored identification information regarding the second object and the stored information regarding whether to display the second AR information.

Preferably the mobile terminal further comprises a communication unit to transmit the image with the first object, the second object, the first AR information to another mobile terminal without transmitting the second AR information.

### BRIEF DESCRIPTION OF THE DRAWINGS

Arrangements and embodiments may be described in detail with reference to the following drawings in which like reference numerals refer to like elements and wherein:

FIG. 1 is a block diagram of a mobile terminal according to an embodiment;

FIG. 2 illustrates an example where a mobile terminal displays (or does not display) augmented reality (AR) information by object according to an exemplary embodiment;

FIG. 3 illustrates an example where a mobile terminal moves displayed AR information with respect to objects according to an exemplary embodiment;

FIG. 4 illustrates an example where a mobile terminal displays AR information with respect to an object appearing in a selected area of a predetermined screen area according to an exemplary embodiment;

FIG. 5 illustrates an example where a mobile terminal displays (or does not display) AR information with respect to an object appearing in a screen area on which a touch input has been received according to an exemplary embodiment;

FIG. 6 illustrates an example where a mobile terminal displays AR information with respect to an object appearing in a screen area designated by an area selection according to an exemplary embodiment;

FIG. 7 illustrates an example where a mobile terminal displays (or does not display) AR information with respect to an object appearing in a screen area designated by an area selection according to an exemplary embodiment;

FIG. 8 illustrates an example where a mobile terminal does not display AR information with respect to an object classified by layer according to an exemplary embodiment;

FIG. 9 illustrates an example where a mobile terminal displays AR information with respect to an object classified by layer according to an exemplary embodiment;

FIG. 10 illustrates an example where a mobile terminal displays AR information by screen area and layer according to an exemplary embodiment;

FIG. 11 is a flow chart illustrating a method for displaying information according to an exemplary embodiment;

FIG. 12 is a flow chart illustrating setting a display screen area in advance before displaying AR information in a method for displaying information according to an exemplary embodiment;

FIG. 13 is a flow chart illustrating displaying AR information in a method for displaying AR information and then setting a display screen area according to an exemplary embodiment;

FIG. 14 is a flow chart illustrating displaying AR information in a method for displaying information and then setting a non-display screen area according to an exemplary embodiment;

FIG. 15 illustrates an example where a mobile terminal includes AR information regarding a target object in a short message according to an exemplary embodiment;

FIG. 16 illustrates an example where a mobile terminal includes a character recognized from an image in a short text message;

FIG. 17 is a flow chart illustrating a method for transmitting information according to an exemplary embodiment;

FIG. 18 is a flow chart illustrating a method for transmitting information according to an exemplary embodiment; and

FIG. 19 is a flow chart illustrating a method for transmitting information according to an exemplary embodiment.

### DETAILED DESCRIPTION

Embodiments of the present disclosure may be described below in detail with reference to the accompanying drawings, where components may be rendered a same reference number that are the same or are in correspondence, regardless of a figure number, and redundant explanations may be omitted. In describing the present disclosure, if a detailed explanation for a related known function or construction is considered to unnecessarily divert a gist of the present disclosure, such explanation has been omitted but would be understood by those skilled in the art.

In the following description, usage of suffixes such as 'module', 'part' or 'unit' used for referring to elements may be given merely to facilitate explanation of the present disclosure, without having any significant meaning by itself. The accompanying drawings of the present disclosure aim to facilitate understanding of the present disclosure and should not be construed as limited to the accompanying drawings.

### Overall configuration of mobile terminal

A mobile terminal may include mobile phones, smart phones, notebook computers, digital broadcast receivers, PDAs (Personal Digital Assistants), PMPs (Portable Multimedia Player), navigation devices, and/or the like. It would be understood by a person in the art that the configuration according to embodiments of the present disclosure can also be applicable to the fixed types of terminals such as digital TVs, desk top computers, and/or the like, except for any elements especially configured for a mobile purpose.

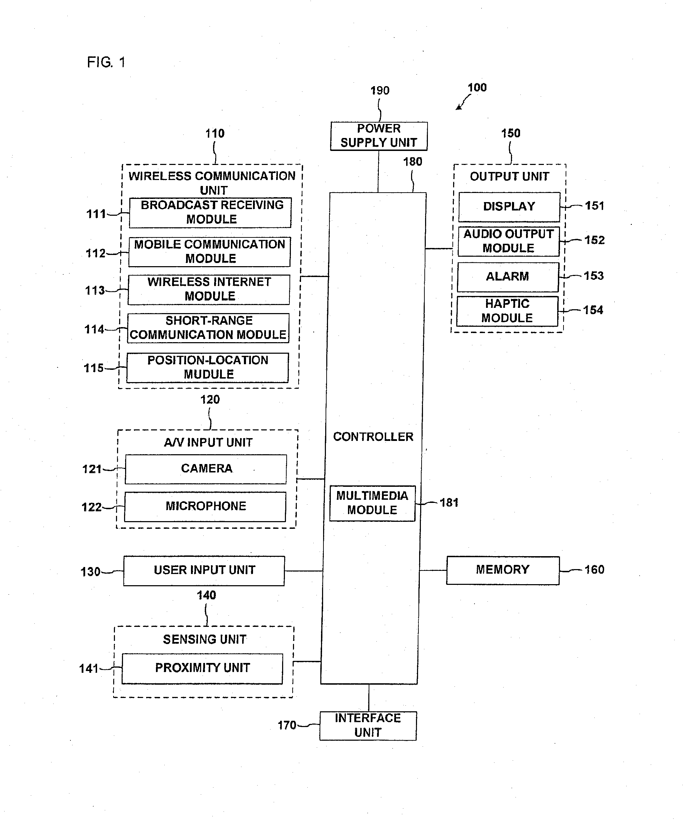

FIG. 1 is a block diagram of a mobile terminal according to an embodiment of the present disclosure. Other embodiments and configurations may also be provided.

A mobile terminal 100 may include a wireless communication unit 110, an Audio/Video (A/V) input unit 120, a user input unit 130, a sensing unit 140, an output unit 150, a memory 160, an interface unit 170, a controller 180, and a power supply unit 190, and/or the like. FIG. 1 shows the mobile terminal 100 as having various components, although implementing all of the illustrated components is not a requirement. Greater or fewer components may alternatively be implemented.

The wireless communication unit 110 may include one or more components allowing radio communication between the mobile terminal 100 and a wireless communication system and/or a network in which the mobile terminal 100 is located. For example, the wireless communication unit 110 may include a broadcast receiving module 111, a mobile communication module 112, a wireless Internet module 113, a short-range communication module 114, and a position-location module 115.

The broadcast receiving module 111 may receive broadcast signals and/or broadcast associated information from an external broadcast management server (or other network entity) via a broadcast channel. The broadcast associated information may refer to information associated with a broadcast channel, a broadcast program and/or a broadcast service provider. The broadcast associated information may also be provided via a mobile communication network and, in this example, the broadcast associated information may be received by the mobile communication module 112. Broadcast signals and/or broadcast-associated information received via the broadcast receiving module 111 may be stored in the memory 160 (or other type of storage medium).

The mobile communication module 112 may transmit and/or receive radio signals to and/or from at least one of a base station (e.g., access point, Node B, and/or the like), an external terminal (e.g., other user devices) and a server (or other network entities). Such radio signals may include a voice call signal, a video call signal and/or various types of data according to text and/or multimedia message transmission and/or reception.

The wireless Internet module 113 may support wireless Internet access for the mobile terminal 100. The wireless Internet module 113 may be internally or externally coupled to the mobile terminal 100. The wireless Internet access technique implemented may include a WLAN (Wireless LAN) (Wi-Fi), Wibro (Wireless broadband), Wimax (World Interoperability for Microwave Access), HSDPA (High Speed Downlink Packet Access), LTE (Long Term Evolution), LTE-A (Long Term Evolution Advanced) and/or the like.

The short-range communication module 114 may be a module for supporting short range communications. Some examples of short-range communication technology may include BluetoothTM, Radio Frequency IDentification (RFID), Infrared Data Association (IrDA), Ultra-WideBand (UWB), ZigBeeTM, and/or the like.

The position-location module 115 may be a module for checking or acquiring a location (or position) of the mobile terminal 100. An example of the position-location module 115 is a GPS (Global Positioning System).

With reference to FIG. 1, the A/V input unit 120 may receive an audio or image signal. The A/V input unit 120 may include a camera 121 (or other image capture device) or a microphone 122 (or other sound pick-up device). The camera 121 may process image frames of still pictures or video obtained by an image capture device in a video capturing mode or an image capturing mode. The processed image frames may be displayed on a display 151 (or display unit) or other visual output device.

The image frames processed by the camera 121 may be stored in the memory 160 (or other storage medium) or may be transmitted via the wireless communication unit 110. Two or more cameras 121 may be provided according to configuration of the mobile terminal 100.

The microphone 122 may receive sounds (audible data) via a microphone (and/or the like) in a phone call mode, a recording mode, a voice recognition mode, and/or the like, and may process such sounds into audio data. The processed audio (voice) data may be converted for output into a format transmittable to a mobile communication base station (or other network entity) via the mobile communication module 112 in case of the phone call mode. The microphone 122 may implement various types of noise canceling (or suppression) algorithms to cancel (or suppress) noise or interference generated in the course of receiving and transmitting audio signals.

The user input unit 130 (or other user input device) may generate input data from commands entered by a user to control various operations of the mobile terminal 100. The user input unit 130 may include a keypad, a dome switch, a touch pad (e.g., a touch sensitive member that detects changes in resistance, pressure, capacitance, and/or the like, due to being contacted), a jog wheel, a jog switch, and/or the like.

The sensing unit 140 (or other detection means) may detect a current status (or state) of the mobile terminal 100 such as an opened state or a closed state of the mobile terminal 100, a location of the mobile terminal 100, a presence or absence of user contact with the mobile terminal 100 (i.e., touch inputs), orientation of the mobile terminal 100, an acceleration or deceleration movement and direction of the mobile terminal 100, and/or the like, and may generate commands or signals for controlling operation of the mobile terminal 100. For example, when the mobile terminal 100 is implemented as a slide type mobile phone, the sensing unit 140 may sense whether the slide phone is opened or closed. Additionally, the sensing unit 140 can detect whether or not the power supply unit 190 supplies power or whether or not the interface unit 170 is coupled with an external device. The sensing unit 140 may include a proximity unit 141.

The output unit 150 may provide outputs in a visual, audible, and/or tactile manner (e.g., audio signal, image signal, alarm signal, vibration signal, etc.). The output unit 150 may include the display 151, an audio output module 152, an alarm (or alarm unit) 153, a haptic module 154, and/or the like.

The display 151 may display (output) information processed in the mobile terminal 100. For example, when the mobile terminal 100 is in a phone call mode, the display 151 may display a User Interface (UI) or a Graphic User Interface (GUI) associated with a call or other communication (such as text messaging, multimedia file downloading, and/or the like.). When the mobile terminal 100 is in a video call mode or image capturing mode, the display 151 may display a captured image and/or received image, a UI or GUI that shows videos or images and functions related thereto, and/or the like.

The display 151 may include at least one of a Liquid Crystal Display (LCD), a Thin Film Transistor-LCD (TFT-LCD), an Organic Light Emitting Diode (OLED) display, a flexible display, a three-dimensional (3D) display, an e-ink display, and/or the like.

Some of the different types of displays may be transparent or light-transmissive to allow viewing of an exterior, which may be called transparent displays. A transparent display may be a TOLED (Transparent Organic Light Emitting Diode) display, and/or the like, for example. Through such configuration, the user can view an object positioned at a rear side of the terminal body through a region occupied by the display 151 of the terminal body.

The mobile terminal 100 may include two or more displays (or other display means) according to its particular desired embodiment. For example, a plurality of displays may be separately or integrally disposed on one surface of the mobile terminal 100, or may be separately disposed on mutually different surfaces.

When the display 151 and a sensor (hereafter referred to as a touch sensor) for detecting a touch operation are overlaid in a layered manner to form a touch screen, the display 151 may function as both an input device and an output device. The touch sensor may have a form of a touch film, a touch sheet, a touch pad, and/or the like.

The touch sensor may convert pressure applied to a particular portion of the display 151 or a change in capacitance and/or the like generated at a particular portion of the display 151 into an electrical input signal. The touch sensor may detect pressure when a touch is applied as well as the touched position and area.

When there is a touch input with respect to the touch sensor, a corresponding signal (signals) may be transmitted to a touch controller. The touch controller may process the signals and transmit corresponding data to the controller 180. Accordingly, the controller 180 may recognize which portion of the display 151 has been touched.

A proximity unit 141 may be provided within or near the touch screen. The proximity unit 141 is a sensor for detecting presence or absence of an object relative to a certain detection surface or an object that exists nearby by using the force of electromagnetism or infrared rays without a physical contact. Thus, the proximity unit 141 may have a considerably longer life span as compared with a contact type sensor, and the proximity unit 141 may be utilized for various purposes.

Examples of the proximity unit 141 may include a transmission type photoelectric sensor, a direct reflection type photoelectric sensor, a mirror-reflection type photo sensor, an RF oscillation type proximity sensor, a capacitance type proximity sensor, a magnetic proximity sensor, an infrared proximity sensor, and/or the like. If the touch screen is the capacitance type, proximity of the pointer may be detected by a change in electric field according to proximity of the pointer. In this example, the touch screen (touch sensor) may be classified as a proximity unit.

The audio output module 152 may convert and output sound audio data received from the wireless communication unit 110 and/or stored in the memory 160 in a call signal reception mode, a call mode, a record mode, a voice recognition mode, a broadcast reception mode, and/or the like. The audio output module 152 may provide audible outputs related to a particular function performed by the mobile terminal 100 (e.g., a call signal reception sound, a message reception sound, etc.). The audio output module 152 may include a receiver, a speaker, a buzzer, and/or other sound generating device.

The alarm 153 (or other type of user notification means) may provide outputs to inform about occurrence of an event of the mobile terminal 100. Events may include call reception, message reception, key signal inputs, a touch input etc. In addition to audio or video outputs, the alarm 153 may provide outputs in a different manner to inform about occurrence of an event. For example, the alarm 153 may provide an output in a form of vibrations (or other tactile or sensible outputs). When a call, a message, and/or some other incoming communication is received, the alarm 153 may provide tactile outputs (i.e., vibrations) to inform the user thereof. By providing such tactile outputs, the user can recognize occurrence of various events even if his mobile phone is in the user's pocket. Outputs informing about the occurrence of an event may also be provided via the display 151 and/or the audio output module 152. The display 151 and the audio output module 152 may be classified as a part of the alarm 153.

The haptic module 154 may generate various tactile effects the user may feel. An example of the tactile effects generated by the haptic module 154 may be vibration. Strength and pattern of the haptic module 154 may be controlled. For example, different vibrations may be combined to be outputted or sequentially outputted.

Besides vibration, the haptic module 154 may generate various other tactile effects such as an effect by stimulation such as a pin arrangement vertically moving with respect to a contact skin, a spray force and/or suction force of air through a jet orifice or a suction opening, a contact on the skin, a contact of an electrode, electrostatic force, and/or an effect by reproducing a sense of cold and warmth using an element that can absorb or generate heat.

The haptic module 154 may allow the user to feel a tactile effect through a muscle sensation such as fingers or arm of the user, as well as transferring the tactile effect through a direct contact. Two or more haptic modules 154 may be provided according to configuration of the mobile terminal 100.

The memory 160 may store software programs used for processing and controlling operations performed by the controller 180, and/or may temporarily store data (e.g., a phonebook, messages, still images, video, etc.) that are inputted or outputted. The memory 160 may also store data regarding various patterns of vibrations and audio signals outputted when a touch is inputted to the touch screen.

The memory 160 may include at least one type of storage medium including a Flash memory, a hard disk, a multimedia card micro type, a card-type memory (e.g., SD or XD memory, etc), a Random Access Memory (RAM), a Static Random Access Memory (SRAM), a Read-Only Memory (ROM), an Electrically Erasable Programmable Read-Only Memory (EEPROM), a Programmable Read-Only memory (PROM), a magnetic memory, a magnetic disk, and/or an optical disk. The mobile terminal 100 may operate in relation to a web storage device that performs storage function of the memory 160 over the Internet.

The interface unit 170 may serve as an interface with external devices connected with the mobile terminal 100. For example, the external devices may transmit data to an external device, receive and transmit power to each element of the mobile terminal 100, and/or transmit internal data of the mobile terminal 100 to an external device. For example, the interface unit 170 may include wired or wireless headset ports, external power supply ports, wired or wireless data ports, memory card ports, ports for connecting a device having an identification module, audio input/output (I/O) ports, video I/O ports, earphone ports, and/or the like.

The identification module may be a chip that stores various information for authenticating authority of using the mobile terminal 100 and may include a user identity module (UIM), a subscriber identity module (SIM), a universal subscriber identity module (USIM), and/or the like. Additionally, the device having the identification module (hereinafter referred to as an identifying device) may take the form of a smart card. Accordingly, the identifying device may be connected via a port with the mobile terminal 100.

When the mobile terminal 100 is connected with an external cradle, the interface unit 170 may serve as a passage to allow power from the cradle to be supplied therethrough to the mobile terminal 100 and/or may serve as a passage to allow various command signals inputted by the user from the cradle to be transferred to the mobile terminal 100 therethrough. Various command signals or power inputted from the cradle may operate as signals for recognizing that the mobile terminal 100 is properly mounted on the cradle.

The controller 180 may control general operations of the mobile terminal 100. For example, the controller 180 may perform controlling and processing associated with voice calls, data communications, video calls, and/or the like. The controller 180 may include a multimedia module 181 for reproducing multimedia data. The multimedia module 181 may be configured within the controller 180 and/or may be configured to be separated from the controller 180.

The controller 180 may perform a pattern recognition processing to recognize a handwriting input or a picture drawing input performed on the touch screen as characters or images, respectively.

The power supply unit 190 may receive external power or internal power and may supply appropriate power required for operating respective elements and components under control of the controller 180.

Embodiments as described herein may be implemented in a computer-readable and/or similar medium using software, hardware, or any combination thereof, for example.

For hardware implementation, embodiments described herein may be implemented by using at least one of application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, and/or electronic units designed to perform functions described herein. Such embodiments may be implemented by the controller 180 itself.

For software implementation, embodiments such as procedures or functions described herein may be implemented by separate software modules. Each software module may perform one or more functions or operations described herein. Software codes can be implemented by a software application written in any suitable programming language. The software codes may be stored in the memory 160 and executed by the controller 180.

### Method for processing user input with respect to mobile terminal

The user input unit 130 may be manipulated to receive a command for controlling operation of the mobile terminal 100 and may include a plurality of manipulation units. The manipulation units may be referred to as a manipulating portion, and various methods and techniques can be employed for the manipulation portion so long as they can be operated by the user in a tactile manner.

The display 151 can display various types of visual information. This information may be displayed in the form of characters, numerals, symbols, graphic and/or icons. In order to input such information, at least one of the characters, numerals, symbols, graphic and/or icons may be displayed in predetermined arrangement in the form of a keypad. The keypad may be referred to as a soft key.

The display 151 may operate as an entire area or may be divided into a plurality of regions so as to operate. The plurality of regions may operate in association with each other.

For example, an output window and an input window may be displayed at an upper portion and a lower portion of the display 151. The output window and the input window are regions allocated to output or input information, respectively. Soft keys marked by numbers for inputting a phone number and/or the like may be outputted to the input window. When a soft key is touched, a number and/or the like corresponding to the touched soft key may be displayed on the output window. When the manipulation unit is manipulated, a call connection to the phone number displayed on the output window may be attempted or text displayed on the output window may be inputted to an application.

The display 151 or a touch pad may be configured to receive a touch through scrolling. The user may move an entity displayed on the display 151, for example, a cursor or a pointer positioned on an icon and/or the like, by scrolling the touch pad. Additionally, when the user moves his finger on the display 151 or on the touch pad, a path along which the user's finger moves may be visually displayed on the display 151. This may be useful in editing an image displayed on the display 151.

A certain function of the terminal may be executed when the display 151 (touch screen) and the touch pad are touched together within a certain time range. For example, the display 151 and the touch pad may be touched together when the user clamps the terminal body by using his thumb and index fingers. The certain function may be activation or deactivation of the display 151 or the touch pad.

Exemplary embodiments may relate to a control method that can be implemented in the terminal configured as described above. Embodiments may now be described with reference to the accompanying drawings. The exemplary embodiments to be described may be solely used or may be combined to be used. The exemplary embodiments to be described may be combined with the foregoing user interface (UI) so as to be used.

### Augmented reality information

An augmented reality (AR) is a field of virtual reality, which refers to a computer graphic technique for synthesizing a virtual object (or information) to a real environment or a real object to make it seen like an object or information existing in the original environment.

AR information may refer to guide information regarding a target object, which may be acquired according to a location-based (GPS-based) method, a marker recognition-based method, and/or the like. An object on which AR information can be displayed may include every object that may possibly be provided with guide information such as articles, goods, building, a route map, public transportation, and/or the like.

In an example of a location-based method, the mobile terminal may acquire AR information regarding a subject (e.g., a subject whose image is being captured by a camera of the mobile terminal) viewed by the mobile terminal by using GPS information and/or geomagnetic sensor information (direction, tilt information), and may display the acquired AR information on an actual image in an overlaid manner to provide guide information regarding the subject.

In comparison, in an example of a marker recognition-based method, the mobile terminal may search for a marker appearing on an image and recognize a size of the marker and a distance to the mobile terminal to determine a three-dimensional location and/or distance of a subject marked by the marker. The mobile terminal may directly acquire AR information from the corresponding AR marker or AR information associated with the corresponding AR marker from a server, and the mobile terminal may display the acquired AR information on the image or at the marker's position.

The AR marker may include the AR information itself in the form of an image, a two-dimensional code, and/or the like, and may include various data such as a character, a number, a symbol, a control code, and/or the like. The mobile terminal may acquire the AR information by decoding the image, the two-dimensional code, and/or the like, of the AR marker in which the AR information has been encoded. The method of configuring the AR marker in the form of a two-dimensional code may be understood in a similar manner to the known two-dimensional code (e.g., QR code, PDF417, DataMatrix, MaxiCode, etc.), so a detailed description may be omitted.

The AR marker may include information (i.e., AR generation information to be described) used to acquire or access the AR information itself or may provide it. For example, the information may be a specific number such as a combination of different numbers or characters given to every AR information, URL information allowing for accessing AR information, and/or the like. The mobile terminal may acquire information by decoding the image, the two-dimensional code, and/or the like, of the AR marker in which the information has been encoded. The mobile terminal can acquire corresponding AR information by referring to the information from the server.

### AR information generation information

The AR generation information may be information used to extract, acquire, access the foregoing AR information. The AR generation information may be called or understood as an AR tag, an AR meta data, an AR source information, an AR acquirement information, and/or the like.

The mobile terminal may transmit the AR generation information to the server and may receive AR information corresponding to the AR generation information from the server. For example, the AR generation information may be GPS information and geomagnetic sensor information (direction, tilt information) of the mobile terminal. The AR generation information may also be a specific number such as a combination of different numbers or characters given to every AR information, and/or URL information allowing for accessing AR information. When different types of AR information are matched to different AR markers, the AR generation information may be identification information (e.g., a serial number and/or the like of the AR markers) discriminating the different AR markers.

The mobile terminal may acquire the AR information from a single AR information server and/or a plurality of AR information servers.

Method for displaying information and mobile terminal using the same

As types or numbers of information provided by an AR information database increase and various AR information databases are established, numerous types of AR information may be displayed in an overlap manner on a screen of the terminal, so the user may not easily find his or her desired information with a terminal according to a disadvantageous arrangement.

In a method for displaying information according to an exemplary embodiment, a plurality of types of AR information may be displayed on a screen. The AR information may be displayed (or not displayed) by object, screen area, and/or layer so the user can easily recognize his desired information.

When a plurality of types of AR information regarding subjects whose images are captured by the camera 121 of the mobile terminal 100 are displayed on the screen, AR information may be displayed only at an object, a screen area, and/or a layer desired by the user according to a user selection or a user input such that AR information not required by the user does not cover the screen, whereby the user can easily recognize only his or her desired AR information.

The mobile terminal 100 may display (or may not display) the AR information through a touch input, a keypad input, a virtual keypad input, a gesture input, a motion input, and/or the like. For example, the mobile terminal 100 may display (or may not display) AR information according to a touch input with respect to a display object, a touch input and/or an area designation on a screen area, a keypad input with respect to a layer, a touch input, flicking, horizontal shaking, and/or the like.

Operation of the mobile terminal according to an exemplary embodiment may now be described by dividing it into an object display associated with AR information, determining whether to display AR information with respect to an object (or target), and displaying (or non-displaying) AR information according to the determination.

Operation of displaying an object (or target) associated with AR information by the mobile terminal 100 may now be described.

### Display of target associated with AR information

The display 151 may display at least one object (or target) associated with AR information.

The display 151 may display an image including at least one object (or target) associated with AR information. For example, when the camera 121 captures an image of an object associated with an AR information, the display 151 may display an image of a street including buildings associated with AR information as a preview screen image or may display an image of a shopping mall in which articles or goods associated with AR information are put on display as a preview image.

Association of the object with AR information means that the AR information may be provided with respect to the object. For example, the mobile terminal 100 may receive AR information regarding the object directly from an AR marker attached to or marked on the object. The mobile terminal 100 may provide AR marker information to the server and receive the AR information regarding the object from the server. The mobile terminal 100 may provide location and direction information of the object to the server and receive AR information regarding the object discriminated by the server.

Before determining whether to display AR information, the controller 180 may acquire AR information regarding every object associated with the AR information among the objects appearing in an image. The controller 180 may display the AR information regarding every object allocated with the AR information, and then display (or does not display) the AR information according to a user input or user selection.

Operation of determining whether to display AR information regarding an object by the mobile terminal 100 may now be described.

### Determining whether to display AR information regarding object

The controller 180 may determine whether to display AR information regarding the object.

The controller 180 may determine whether to display AR information by object. For example, whenever a touch input is performed on individual objects on the display 151 (touch screen), the controller 180 may determine by toggling displaying (or non-displaying) AR information regarding each object.

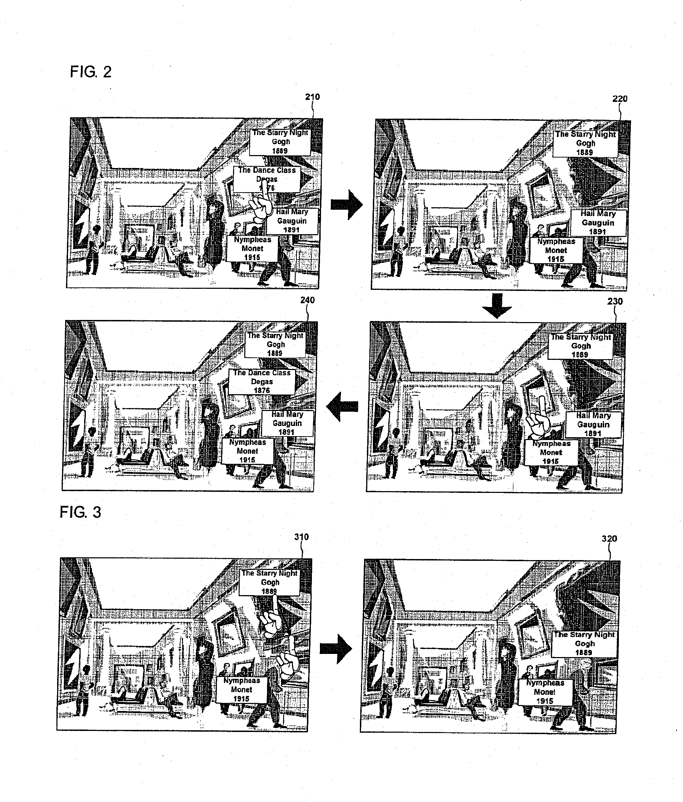

FIG. 2 illustrates an example where a mobile terminal displays (or does not display) augmented reality (AR) information by object according to an exemplary embodiment. Other embodiments and configurations may also be provided.

As shown in FIG. 2, the mobile terminal 100 may display AR information (i.e., a title, a painter, a production year in FIG. 2) of each picture on each image displaying a whole view of an interior of an art gallery. When the user touches AR information displayed for 'The Dance Class' as shown on the screen 210, the mobile terminal 100 may remove the AR information displayed for 'The Dance Class' as shown on the screen 220. When the user touches 'The Dance Class' picture again, the mobile terminal 100 may again display the AR information for 'The Dance Class' as shown on the screen 240.

FIG. 3 illustrates an example where a mobile terminal moves displayed AR information with respect to objects according to an exemplary embodiment. Other embodiments and configurations may also be provided.

As shown in FIG. 3, the mobile terminal 100 may display AR information (i.e., a title, a painter, a production year in FIG. 3) of each picture on each image displaying a whole view of an interior of an art gallery. When the user moves AR information displayed for 'The Starry Night' in a drag manner, the mobile terminal 100 may display the AR information with respect to 'The Starry Night' at a position where dragging was stopped.

The controller 180 may determine whether to display AR information by screen area where an object is positioned. That is, the controller 180 may display AR information only with respect to objects appearing in a determined screen area. As a result, AR information may not be displayed with respect to objects appearing in a screen area in which AR information is determined not to be displayed.

The controller 180 may designate the screen area before AR information is displayed, and/or the controller 180 may designate the screen area after AR information is displayed. AR information may be displayed only in a screen area in which the AR information was initially determined to be displayed. The screen area may also be designated after AR information with respect to every object associated with AR information is displayed.

For example, the controller 180 may determine to display (or not to display) the AR information with respect to the area selected or inputted by the user from among the previously designated sectional areas. The previously designated sectional areas may be areas obtained by dividing in four by two rows and two columns, dividing in nine by three rows and three columns, and/or the like.

The controller 180 may determine to display (or not to display) the AR information on the area where the user's touch input has been received or an area designated by a touch input and/or the like. The controller 180 may designate a rubbed or flickered area, an internal area of a figure inputted through drawing, and/or the like, as the area on the display 151 (touch screen).

Whenever there is a touch input to a particular screen area on the display 151 (touch screen), the controller 180 may determine, through toggling, to display (or not to display) AR information with respect to objects appearing on the screen area.

For example, the controller 180 may toggle whether to display AR information with respect to objects appearing on the screen area according to a different rubbing direction or a different flicking direction on the display 151.

Whenever a figure is inputted to the same area on the display 151 (touch screen), the controller 180 may toggle whether to display AR information with respect to the corresponding screen area.

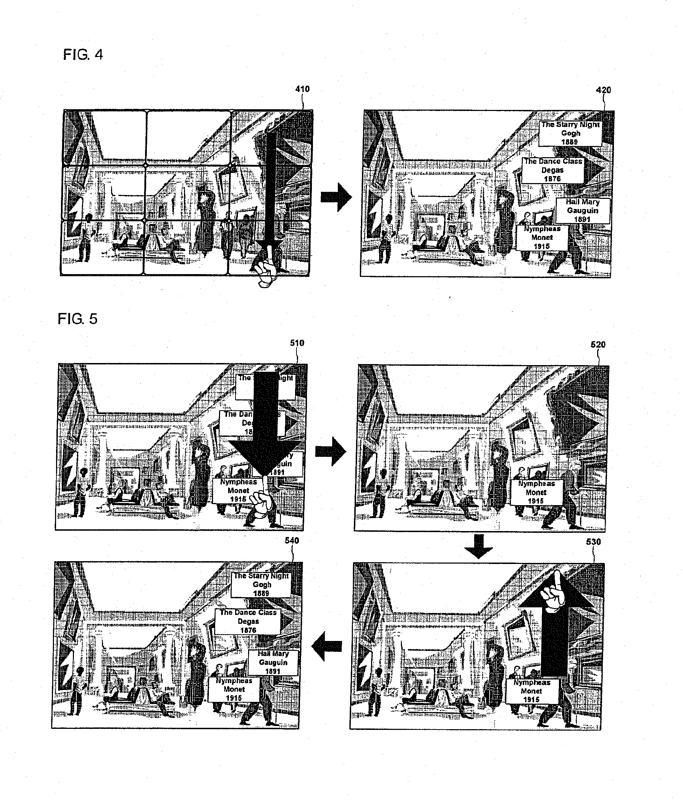

FIG. 4 illustrates an example where a mobile terminal displays AR information with respect to an object appearing in a selected area of a predetermined screen area according to an exemplary embodiment. Other embodiments and configurations may also be provided.

As shown in FIG. 4, when the mobile terminal 100 displays the nine-divided screen area and the user rubs (or touches) three areas corresponding to the far-right column as shown in the screen 410, the mobile terminal 100 may display AR information regarding pictures appearing on the three areas as shown in the screen 420.

FIG. 4 shows a determination of areas of the displayed image based on movement of a pointer, and a determination of whether an object is provided in the determined area. When the object is determined to be provided within the determined area, the AR information is obtained and displayed with the object. The movement of the pointer may include movement of the pointer over a plurality of predetermined regions of the display and identifying the regions based on the movement of the pointer. Although not shown in FIG. 4, displaying the AR information and the image may include displaying the AR information such that the displayed AR information overlaps a front position of AR information of another object of the image.

FIG. 5 illustrates an example where a mobile terminal displays (or does not display) AR information with respect to an object appearing in the screen area on which a touch input has been received according to an exemplary embodiment. Other embodiments and configurations may also be provided.

As shown in FIG. 5, the mobile terminal 100 may display AR information (a title, a painter, a production year in FIG. 5) of each picture on each image displaying a whole view of an interior of an art gallery. When the user rubs (or touches) a right screen area of the image from top to bottom as shown in screen 510, the mobile terminal 100 may remove the AR information displayed for 'The Starry Night', 'The Dance Class', and 'Hail Mary' pictures appearing on the touched screen area as shown in screen 520. When the user rubs (or touches) the right screen area of the image from bottom to top as shown in screen 530, the mobile terminal 100 may again display the AR information for 'The Starry Night', 'The Dance Class', and 'Hail Mary' as shown in screen 540.

FIG. 5 shows an example where an image is displayed and the image includes a first object, first AR information associated with the first object, a second object and second AR information associated with the second object. Other objects and AR information may also be provided. In response to receiving information regarding movement of a pointer with respect to the displayed image, the AR information associated with the second object, for example, may be identified. The display of the mobile terminal may then display the image with the first object, the second object and the first AR information associated with the first object and without the AR information associated with the second object when the AR information associated with the second object is identified based on the received information regarding movement of the pointer.

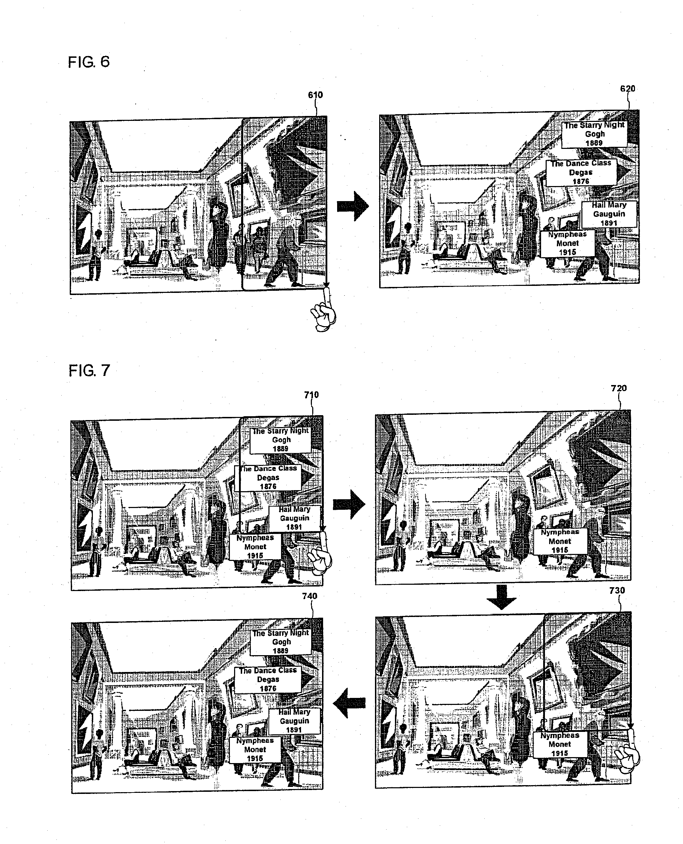

FIG. 6 illustrates an example where a mobile terminal displays AR information with respect to an object appearing in a screen area designated as an area selection according to an exemplary embodiment. Other embodiments and configurations may also be provided.

As shown in FIG. 6, when the user designates a quadrangular area including a right portion of the image as shown in screen 610, the mobile terminal 100 may display AR information for 'The Starry Night', 'The Dance Class', 'Hail Mary', and 'Nympheas' pictures appearing on the quadrangular area as shown in screen 620.

FIG. 7 illustrates an example where a mobile terminal displays (or does not display) AR information with respect to an object appearing in the screen area designated as an area selection according to an exemplary embodiment. Other embodiments and configurations may also be provided.

As shown in FIG. 7, the mobile terminal 100 may display AR information (i.e., a title, a painter, a production year in FIG. 7) of each picture on each image displaying a whole view of an interior of an art gallery. When the user designates a quadrangular area on a portion of the right screen of the image as shown in screen 710, the mobile terminal 100 may remove AR information displayed for 'The Starry Night', 'The Dance Class', and 'Hail Mary' pictures appearing in the designated screen area as shown in screen 720. When the user designates a quadrangular area of a portion of the same right screen as shown in screen 730, the mobile terminal 100 may display the AR information for 'The Starry Night', 'The Dance Class', and 'Hail Mary' pictures appearing in the quadrangular area as shown in screen 740.

The controller 180 may determine whether to recognize an AR marker by screen area where an object is positioned. The controller 180 may recognize an AR marker only with respect to objects appearing on a screen area determined to recognize the AR marker. As a result, AR information may not be displayed for objects appearing on a screen area determined not to recognize an AR marker.

An example in which whether to recognize the AR marker by screen area and whether to display AR information on the screen area is toggled whenever there is a touch input to a particular screen area may be understood in a similar manner to the example in which whether to display AR information by screen area and whether to display AR information on a screen area is toggled whenever there is a touch input to the particular screen, so a detailed description thereof may be omitted.

The controller 180 may determine whether to display AR information by layer classifying objects. The controller 180 may display AR information only for objects included in a layer determined to display AR information. As a result, AR information may not be displayed for objects included in a layer determined not to display AR information.

The layer may be defined according to a layer tag, a type (category), and/or a classification given to each object by the user. The layer may also be defined according to distance information given to each object while the user zooms in or out of an image.

The layer may be automatically classified to be defined by the controller 180 according to a type (category) of each object and a distance between each object and the mobile terminal 100.

Whenever there is a touch input to a particular layer on the display 151 (touch screen), the controller 180 may determine whether to display (or not to display) AR information with respect to objects included in the layer through toggling.

For example, the controller 180 may toggle whether to display AR information with respect to the objects included in the corresponding layer according to different flicking directions (i.e., a vertical flicking direction, a horizontal flicking direction, and/or the like) or different gestures on the display 151 (touch screen) by the user.

The controller 180 may acquire AR information with respect to an object determined to display the AR information among objects appearing on the image, after determining whether to display AR information. The controller 180 may acquire AR information only for an object determined to display AR information, thus reducing resource required for acquiring AR information.

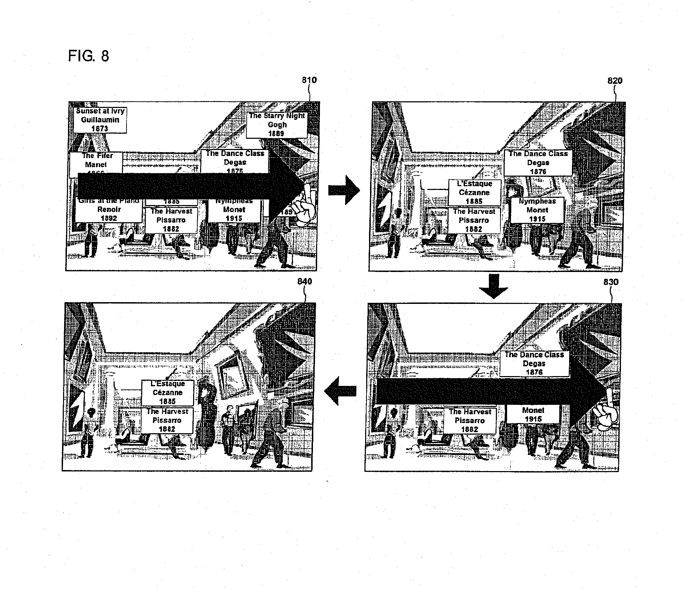

FIG. 8 illustrates an example where a mobile terminal does not display AR information with respect to an object classified by layer according to an exemplary embodiment. Other embodiments and configurations may also be provided.

As shown in FIG. 8, the mobile terminal 100 may display AR information (i.e., a title, a painter, a production year in FIG. 8) of each picture on each image displaying a whole view of an interior of an art gallery. When the user flicks from left to right on the screen 810, the mobile terminal 100 may remove AR information displayed for 'The Starry Night', 'Hail Mary', 'Girls at the Piano', 'The Fifer', and 'Sunset at Ivry', which are the closest pictures on a layer, as shown in screen 820. When the user flicks from left to right on the screen 830 again, the mobile terminal 100 may remove AR information for 'The Dance Class' and 'Nympheas', which are the next-closer pictures on a layer, as shown in screen 840.

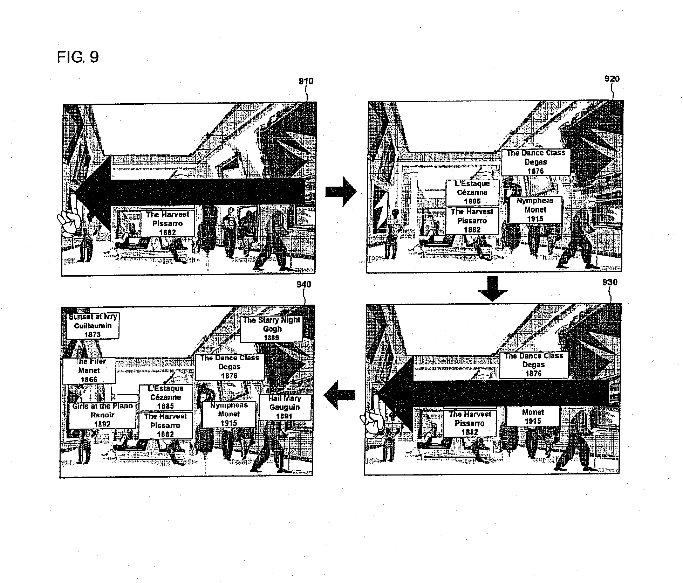

FIG. 9 illustrates an example where a mobile terminal displays AR information with respect to an object classified by layer according to an exemplary embodiment. Other embodiments and configurations may also be provided.

As shown in FIG. 9, the mobile terminal 100 may display AR information (i.e., a title, a painter, a production year in FIG. 9) of each picture on each image displaying a whole view of an interior of an art gallery. When the user flicks from right to left on the screen 910, the mobile terminal 100 may display AR information for 'The Dance Class' and 'Nympheas', which are the closer pictures on a layer than the pictures on another layer on which the AR information is currently displayed, as shown in screen 920. When the user flicks from left to right on the screen 930 again, the mobile terminal 100 may display AR information for 'The Starry Night', 'Hail Mary', 'Girls at the Piano', 'The Fifer', and 'Sunset at Ivry', which are the closest pictures on a layer, as shown in screen 940.

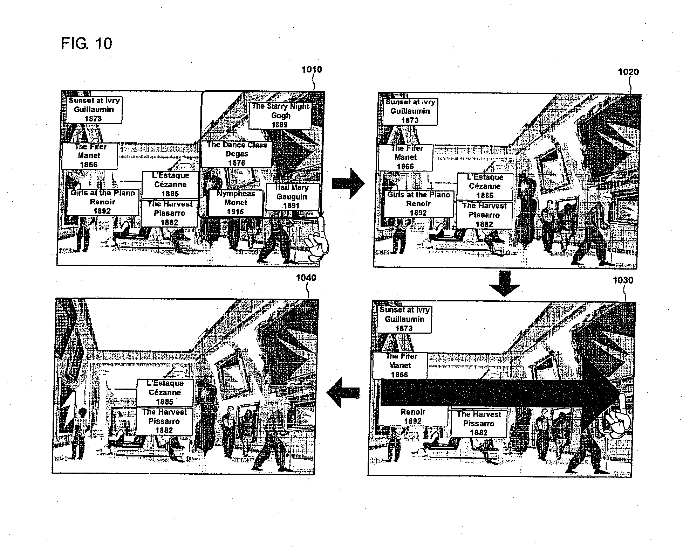

FIG. 10 illustrates an example where a mobile terminal displays AR information by screen area and layer according to an exemplary embodiment. Other embodiments and configurations may also be provided.

As shown in FIG. 10, the mobile terminal 100 may display AR information (i.e., a title, a painter, a production year in FIG. 10) of each picture on each image displaying a whole view of an interior of an art gallery. When the user designates a quadrangular area on a portion of the right screen of the image as shown in screen 1010, the mobile terminal 100 may remove AR information displayed for 'The Starry Night', 'The Dance Class', and 'Hail Mary', which are the pictures appearing in the designated screen area, as shown in screen 1020. When the user flicks from left to right on the screen 1030, the mobile terminal 100 may remove the AR information for 'Girls at the Piano', 'The Fifer', and 'Sunset at Ivry', which are the closest pictures on a layer, as shown in screen 1040.

The operation of displaying (or not displaying) AR information according to a determination as to whether or not AR information is displayed by the mobile terminal 100 may now be described.

### Displaying or non-disiplaying of AR information according to determination of whether to display

The controller 180 may display (or may not display) AR information with respect to a particular object according to a determination as to whether or not AR information with respect to the particular object is to be determined. As described above, the controller 180 may adjust position and/or direction of AR information with respect to each object according to a user input such as dragging and/or the like.

The controller 180 may store identification information in the memory 160 regarding an object, a screen area or a layer and whether to display AR information with respect to the object, the screen area, and/or the layer.

The identification information regarding the object may be position and direction information (e.g., GPS information, geomagnetic sensor information, and/or the like) that can specify the object, and/or a unique identification number that can specify the object in an AR information database. When the object disappears from the screen and is then displayed, the controller 180 may display (or may not display) the AR information for the object according to a previous setting based on the identification information with respect to the object and the information as to whether to display AR information.

The screen area may be defined by using X-axis pixel coordinates and Y-axis pixel coordinates on the screen. For example, when the screen area is designated to have a polygonal shape, identification information with respect to the screen area may include X-axis pixel coordinates and Y-axis pixel coordinates of at least one vertex of the polygonal shape. Although the screen displayed by the display 151 varies due to a change in position and direction of the mobile terminal 100, the controller 180 may display (or may not display) the AR information only in the corresponding screen area based on the identification information regarding the screen area.

The identification information regarding a layer may be defined in a form of a set of identification information regarding the foregoing object. Identification information regarding a layer may include identification information regarding at least one object.

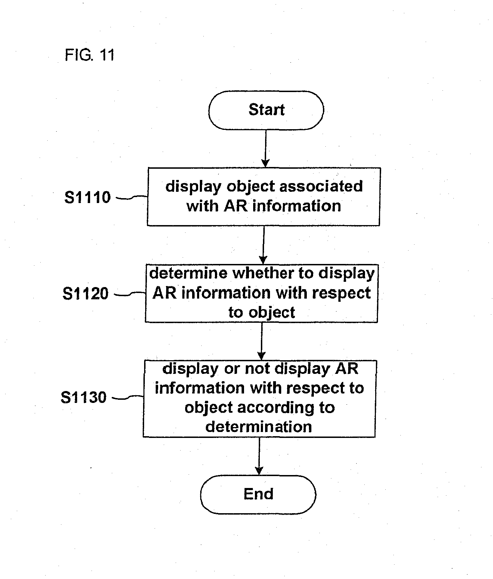

FIG. 11 is a flow chart illustrating a method for displaying information according to an exemplary embodiment. Other embodiments, operations and configurations may also be provided.

As shown in FIG. 11, the mobile terminal 100 may display an object associated with AR information (S1110).

The mobile terminal may then determine whether to display AR information with respect to the object (S1120).

The mobile terminal 100 may determine whether to display AR information by object (i.e., for each object). The mobile terminal 100 may toggle whether to display AR information according to a touch input with respect to each object.

The mobile terminal 100 may determine whether to display AR information by screen area in which the object is positioned or determine whether to recognize an AR marker by a screen area in which the object is positioned. The mobile terminal 100 may toggle whether to display AR information according to a touch input or an area designation with respect to the screen area.

The mobile terminal 100 may determine whether to display the AR information by layer (i.e., for each layer) classifying objects. The layer may be defined to classify objects according to types of objects, tags given to objects, and/or distance between objects and the mobile terminal 100. The mobile terminal 100 may toggle whether to display the AR information according to a flicking direction on the image (screen).

The mobile terminal 100 may acquire AR information regarding an object determined to display AR information after determining whether to display the AR information, and/or acquire AR information regarding the object before determining whether to display the AR information. The AR information may be acquired based on an AR marker recognized by the mobile terminal 100 and/or acquired from the server based on location and direction of the mobile terminal 100.

The mobile terminal 100 may display (or may not display) the AR information regarding the object according to the determination (S1130).

The mobile terminal 100 may store identification information regarding the object and information as to whether to display the AR information. When the object disappears from the screen and is then displayed again on the screen, the mobile terminal 100 may display (or may not display) the AR information regarding the object based on the identification information regarding the object and information as to whether to display the AR information.

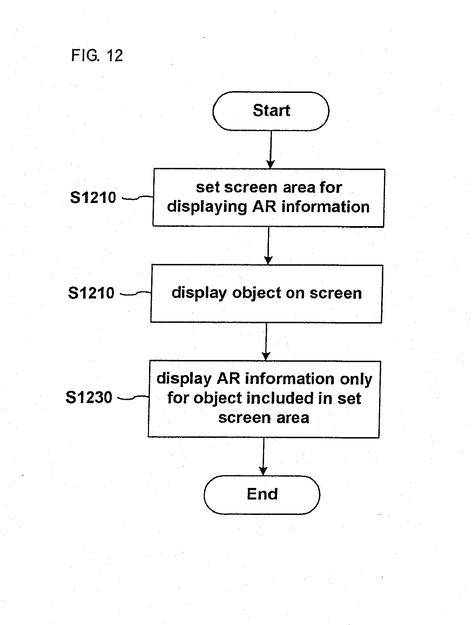

FIG. 12 is a flow chart illustrating setting a display screen area in advance before displaying AR information in a method for displaying information according to an exemplary embodiment. Other embodiments, operations and configurations may also be provided.

As shown in FIG. 12, the mobile terminal 100 may set a screen area for displaying AR information (S1210). The mobile terminal may then display a captured image of an object on the screen (S1220). The mobile terminal 100 may display AR information only about the object included in the set screen area (S1230).

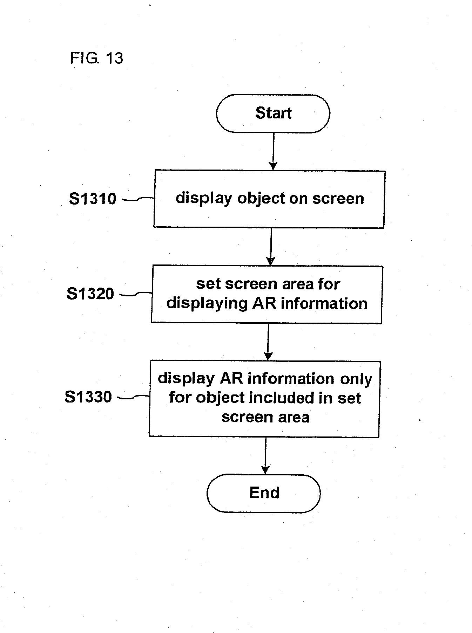

FIG. 13 is a flow chart illustrating displaying AR information in a method for displaying AR information and then setting a display screen area according to an exemplary embodiment. Other embodiments, operations and configurations may also be provided.

As shown in FIG. 13, the mobile terminal 100 may display a captured image of an object on the screen (S1310). The mobile terminal 100 may set a screen area for displaying AR information (S1320). The mobile terminal 100 may then display AR information only about the object included in the set screen area (S1230).

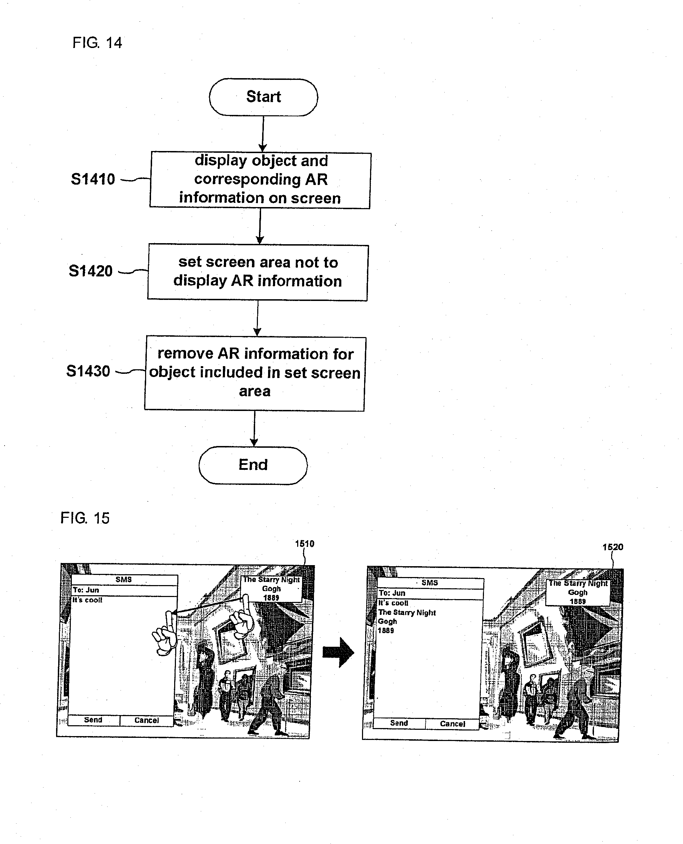

FIG. 14 is a flow chart illustrating displaying AR information in a method for displaying information and then setting a non-display screen area according to an exemplary embodiment. Other embodiments, operations and configurations may also be provided.

As shown in FIG. 14, the mobile terminal 100 may display a captured image of an object and AR information corresponding to the object on the screen (S1410). The mobile terminal 100 may set a screen area where AR information is not to be displayed (S1420). The mobile terminal 100 may remove AR information regarding the object included in the set screen area (i.e., the AR information is not displayed) (S1430).

A method for displaying information according to an exemplary embodiment may be similarly understood as described above for a mobile terminal with reference to FIGs. 1-10, so a detailed description thereof may be omitted.

The method for displaying information and the mobile terminal using the same have been described. A method for transmitting information and a mobile terminal using the same may now be described.

### Method for transmitting information and mobile terminal using the same

A terminal according to a disadvantageous arrangement may not have a problem in transferring simple information as text, but may have shortcomings in that keys of the keypad must be manipulated many times in order to create more detailed or complicated information as a sentence.

In a method for transmitting information according to an exemplary embodiment, information regarding an object whose image is currently captured or has been already captured may be transmitted in various forms such as text, an image, AR generation information, AR information, and/or the like, to thereby effectively transfer the information regarding an object the user is looking at or an object around the user to a counterpart.

In the method for transmitting information according to an exemplary embodiment, a text explaining a target object, an image obtained by capturing the target object, AR information or AR generation information regarding the target object may be transmitted to the counterpart, so that the user can transmit more detailed, accurate information desired to be transferred to the counterpart, to the counterpart. Accordingly, the counterpart may check the received text, the image, and/or the AR information, and/or the counterpart may check the AR generation information from a server to acquire AR information.

In the method for transmitting information according to an exemplary embodiment, a character, a number, a symbol, and/or a figure displayed on an image captured by a camera, a character, a number, a symbol, and/or a figure included in the AR information may be recognized to be used for inputting characters, whereby user inconvenience of performing a keypad (button) input, a virtual keypad input, a gesture input, and/or the like in inputting characteristics may be reduced.

In the following, the mobile terminal 100 currently captures an image of an object. However, an example in which the mobile terminal 100 currently captures an image of the target object is merely to explain an exemplary embodiment, and a technical idea is not limited to such an exemplary embodiment.

The mobile terminal may transmit information regarding a target object included in an image that has been previously captured and stored to a different mobile terminal. Meta data of the stored image may include location information, direction information, and/or the like, of the mobile terminal 100 or may include information for acquiring or accessing AR information regarding the target object. When each different AR information is matched to each different AR marker, the meta data of the stored image may include identification information (e.g., a serial number of the AR marker, etc.) of the AR marker marked or attached to the target object. The mobile terminal 100 may recognize the target object by using the meta data or acquire AR information associated with the target object.

The operation of the mobile terminal 100 may now be described by dividing it into transmission of AR-related information and transmission of information recognized from an image.

The operation of transmitting AR-related information by the mobile terminal 100 may now be described.

### Transmission of AR-related information

The camera 121 may capture an image of a target object. The target object may include every object such as articles, goods, building, a route map, public transportation, and/or the like, whose guide information may be provided.

The controller 180 may acquire AR information associated with the captured target object or AR generation information used to access the AR information.

The AR generation information may be location information and/or direction information of the mobile terminal 100. The controller 180 may transmit the location information and/or direction information of the mobile terminal 100 to a server and receive the AR information regarding the target object corresponding to the location and/or direction of the mobile terminal 100 from the server.

When the camera 121 captures an image of a target object, the display 151 may display the captured image of the target object. The position-location module 115 may acquire global positioning system (GPS) information of the mobile terminal 100 that captures the image of the target object, and the sensing unit 140 may detect geomagnetic sensor information (direction, tilt information) of the mobile terminal 100 that captures the image of the target object.

When the controller 180 transmits the GPS information and the detected geomagnetic sensor information (direction, tilt information) to an AR information server, the AR information server may identify the target object from the received GPS information and geomagnetic sensor information (direction, tilt information). The controller 180 may receive AR information regarding the identified target object from the AR information server, and control the display 151 to display the received AR information.

The AR generation information may include information regarding a field of view of the camera 121, height information of the target object, depth information of the target object, floor information of the target object, and image capture time information of the target object, as well as the location information and direction information of the mobile terminal 100.

The information regarding a field of view may be added to the location information and the direction information so as to be used to precisely determine a range of the captured image displayed on the screen or precisely specify the target object. The height information or depth information of the target object may more minutely divide the target object by height or by depth, such as a building and/or the like so as to be used to provide the AR information. Image capture time information of the target object may be used to provide alteration history of the target object and/or that of the AR information with respect to the target object.

The AR generation information is the location information and/or direction information of the mobile terminal 100, although the AR information or the AR generation information may be results obtained by recognizing an AR marker marked on or attached to the target object by the mobile terminal 100.

The results obtained by recognizing the AR marker by the mobile terminal 100 may be AR information or AR generation information that can be acquired by the mobile terminal 100 based on two-dimensional or three-dimensional display scheme or external appearance of the AR marker, or AR information or AR generation information that may be received by the mobile terminal 100 from the AR marker through wireless transmission and/or the like.

For example, when AR information is encoded in the AR marker itself, the controller 180 may acquire AR information by decoding the AR information that has been encoded in the recognized AR marker.

When the AR generation information is encoded in the AR marker, the controller 180 may decode the AR generation information that has been encoded in an image of the AR marker, a two-dimensional code, and/or the like, and transmit the decoded AR generation information to the server in order to receive corresponding AR information from the server. For example, when different AR information is matched to each different AR marker, the AR generation information that has been encoded in the AR marker may be AR marker identification information.

When the camera 121 captures an image of the target object, the display 151 may display the captured image of the target object. The controller 180 may recognize the AR marker included in the captured image of the target object to find out the AR generation information (or the AR marker identification information) associated with the AR marker.

The AR generation information (or the AR marker identification information) may be included in the form of plane text or in an encoded form in visually displayed content of the AR marker. In order to acquire the information, the controller 180 may employ a vision recognition, a pattern recognition, a two-dimensional code recognition, and/or the like, to the visual display content of the AR marker.

When the AR marker transmits the AR generation information (or the AR marker identification information) in a wireless manner, the short-range communication module 114 or the sensing unit 140 may detect to acquire it. The technical configuration in which the short-range communication module 114 or the sensing unit 140 recognizes the AR marker in a wireless manner may be applicable to an example where the AR marker is provided in a ubiquitous sensor network (USN) manner.

The controller 180 may recognize the AR marker and transmit the recognition result (AR generation information) to the AR server. The AR server may search for AR information regarding the target object based on the received information. The controller 180 may receive the AR information regarding the target object from the AR server and control the display 151 to display the received AR information.

When the AR information or the AR generation information is acquired as described above, the wireless communication unit 110 may transmit the AR information or the AR generation information to a different mobile terminal. The different mobile terminal may acquire the information regarding the target object directly from the AR information or may acquire the information regarding the target object by accessing the AR information stored in the server by using the AR generation information.

The wireless communication unit 110 may transmit the AR information, the AR generation information, the captured image of the target object, and the results obtained by recognizing a character, a number, a symbol, and/or a figure (to be described) to the different mobile terminal by using every available type of messages, text, images, binary file transmission method, and/or the like.

For example, the wireless communication unit 110 may transmit the AR information or the AR generation information to the different mobile terminal by using a short message service (SMS) or a multimedia messaging service (MMS). The wireless communication unit 110 may include the AR information or the AR generation information in a message, and may transmit the same to the different mobile terminal.

The display 151 may concurrently display the AR information regarding the target object and a message creation window in the form of a partial screen and/or the like. When the user includes the AR information in a message text (body) by using a keypad input, a touch input, a gesture input, and/or the like, the wireless communication unit 110 may transmit the message including the AR information to the different mobile terminal.

The keypad input may be a number input, a select key (e.g., an enter key) input, and/or the like, designated by discriminating each AR information. The touch input may be an input such as clicking the AR information to be inserted in the message text (body) or dragging the AR information and dropping it to the message text (body). The gesture input may be an input of selecting AR information to be inserted into the message text (body) according to shaking left and right.

FIG. 15 illustrates an example where a mobile terminal includes AR information regarding a target object in a short message according to an exemplary embodiment. Other embodiments and configurations may also be provided.

As shown in FIG. 15, when the user drag-and-drops AR information regarding a particular picture displayed in an art gallery to a message text (body) of a short message as shown in screen 1510, the mobile terminal 100 may insert the corresponding AR information in the form of a text into the message text (body) of the short message as shown in screen 1520.

Although not shown in FIG. 15, the display 151 may display a function menu for inserting the AR generation information into the message text (body) on a message creation window. When the user selects AR information by using a keypad input, a touch input, a gesture input, and/or the like and selects the function menu for inserting the AR generation information with respect to the selected AR information, the controller 180 may include the AR generation information into the message text (body) and the wireless communication unit 110 may transmit the message including the AR generation information to a different mobile terminal.

The wireless communication unit 110 may transmit the captured image of the target object along with the AR information or the AR generation information to the different mobile terminal. The wireless communication unit 110 may transmit only the AR information or the AR generation information in the form of text, an image, and/or the like, although it may also additionally transmit the captured image of the target object to the different mobile terminal.

The wireless communication unit 110 may transmit an image obtained by visually overlaying the AR information on the captured image of the target object to the different mobile terminal. For example, when the display 151 displays the AR information on the captured image of the target object in an overlaid manner, the controller 180 may generate a screen capture image displayed in an overlaid manner and the wireless communication unit 110 may transmit the screen capture image to the different mobile terminal.

The controller 180 may recognize a character, a number, a symbol, a figure, and/or the like with respect to the AR information displayed in the overlaid manner, and the wireless communication unit 110 may transmit the recognition results to the different mobile terminal.

For example, when the user designates a screen area through a touch input (drag) by starting from a left upper point of a virtual quadrangle and stopping at a right lower point, a touch input through rubbing on the screen, and/or the like, the controller 180 may recognize a character (and/or the like) within the designated screen area.

The controller 180 may previously recognize a character (and/or the like) with respect to the captured image of the target object and discriminately display a screen area in which a character (and/or the like) is recognized (e.g., framing (i.e., drawing borders), a highlight display, a color reversing display, a shadow display, a blinking display, an icon display, and/or the like), so that the user can acquire a character (and/or the like) recognized within the selected area.

For example, the wireless communication unit 110 may include the results obtained by recognizing a character, a number, a symbol, and/or a figure from the AR information in the message, and transmit the same to the different mobile terminal.

The display 151 may concurrently display the AR information regarding the target object and a message creation window in the form of a partial screen and/or the like. After a character, a number, a symbol, and/or a figure with respect to the AR information is recognized in the similar manner to that of the foregoing recognition method, the user may include the recognition results in the message text (body) by using a keypad input, a touch input, a gesture input, and/or the like. The wireless communication unit 110 may transmit the recognition results to the different mobile terminal.

When the wireless communication unit 110 transmits the AR generation information to the different mobile terminal, the different mobile terminal may acquire AR information regarding a target existing outside the range of a captured image of the original target object based on the received AR generation information.

For example, it is assumed that the wireless communication unit 110 transmits location information and direction information of the mobile terminal 100 along with the captured image of the target object. The user of the different mobile terminal that has received the captured image, the location information, and the direction information may input horizontal dragging or horizontal flicking in order to view an object existing outside the range of the captured image displayed on the screen or AR information regarding the object. The different mobile terminal may transmit the location information and the direction information that has been corrected according to a user input to the server, and may receive a corresponding image or AR information regarding an object appearing in the corresponding image.

The operation of transmitting the AR-related information by the mobile terminal 100 has been described, although the mobile terminal 100 may perform an operation of transmitting information recognized from an image.

### Transmission of information recognized from image

The camera 121 may capture an image of a target object. The controller 180 may recognize a character, a number, a symbol and/or a figure displayed on the captured image of the target object. The wireless communication unit 110 may transmit the recognition results to a different mobile terminal.

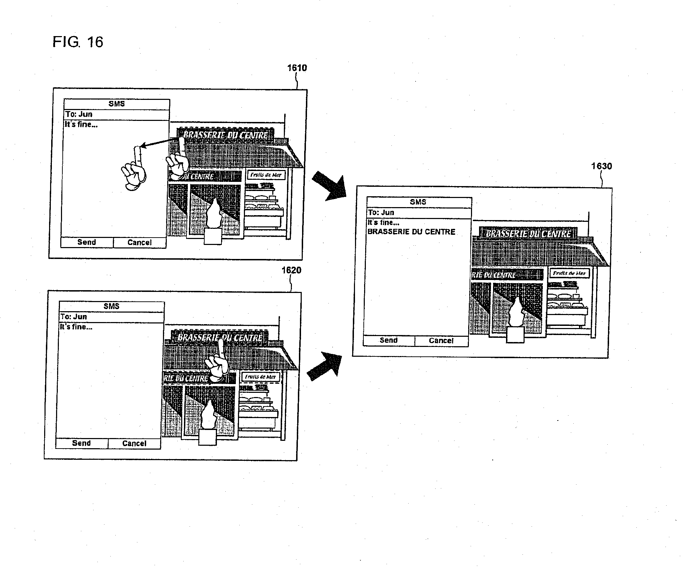

FIG. 16 illustrates an example where a mobile terminal includes a character recognized from an image in a short text message.

As shown in FIG. 16, when the user designates a character recognition area and drag-and-drops a character recognized in the designated area to a message text (body) of a short message as shown in screen 1610, the mobile terminal 100 may insert corresponding AR information in the form of text into the message text (body) of the short message as shown in screen 1630.

The mobile terminal may perform a previous character recognition on an image, frame a character recognition available area, and select an area having a phrase to be inserted by the user. The mobile terminal 100 may insert corresponding AR information in the form of text into the message text (body) of the short message as shown in screen 1630.

The operation of transmitting the information recognized from the image by the mobile terminal 100 can be similarly understood to the operation of transmitting the AR-related information by the mobile terminal 100 as described above, so a detailed description thereof may be omitted.

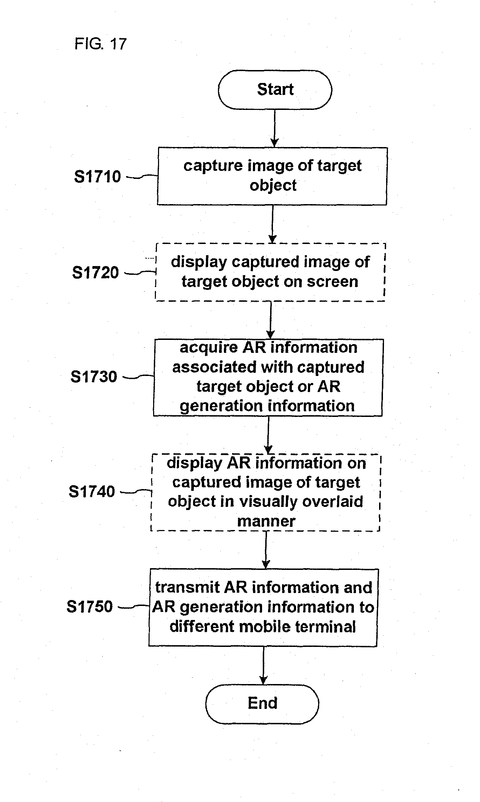

FIG. 17 is a flow chart illustrating a method for transmitting information according to another exemplary embodiment. Other embodiments, operations and configurations may also be provided.

As shown in FIG. 17, the mobile terminal 100 may capture an image of a target object (S1710).

The mobile terminal 100 may acquire AR information associated with the captured image of the target object or AR generation information used to access the AR information (S1730).

The AR information may be acquired from a server with respect to the target object corresponding to the location and direction of the mobile terminal 100 and/or acquired based on the results of recognizing an AR marker marked on the target object. The recognition results of the AR marker may refer to results obtained by decoding information that has been encoded in the AR marker in the form of an image, a two-dimensional code, and/or the like.

The AR generation information may include the location information and direction information of the mobile terminal 100, may include identification information of the AR information or an access address to the AR information, or may include identification information of the AR marker marked on the target object. The identification information of the AR information or the access address to the AR information may refer to information allowing the AR information server that stores or provides the AR information to designate or access the AR information.

When the AR generation information includes the location information and the direction information of the mobile terminal 100, the AR generation information may further include information regarding a field of view of the camera 121, height information of the target object, depth information of the target object, and/or image capture time information of the target object.

The mobile terminal 100 may transmit the AR information or the AR generation information to a different mobile terminal (S1750).

The mobile terminal may transmit the captured image of the target object along with the AR information or the AR generation information to the different mobile terminal. The mobile terminal 100 may transmit an image obtained by visually overlaying the AR information on the captured image of the target object to the different mobile terminal.

The mobile terminal 100 may display the captured image of the target object on the screen (S1720). The mobile terminal 100 may visually display the AR information on the captured image of the target object in an overlaid manner (S1740).

The mobile terminal 100 may transmit results obtained by recognizing a character, a number, a symbol, and/or a figure with respect to the AR information displayed in an overlaid manner to the different mobile terminal. The recognition of the character, the number, the symbol, and/or the figure may be performed within a screen area inputted by the user or a screen area in which the character, number, symbol or figure is recognized according to a previous recognition result.

The mobile terminal 100 may display a message creation window, and may include the results obtained by recognizing the character, the number, the symbol, or the figure with respect to the AR information displayed in the overlaid manner in the message text (body) by using a keypad input, a touch input, and/or a gesture input, and may transmit the message to the different mobile terminal.

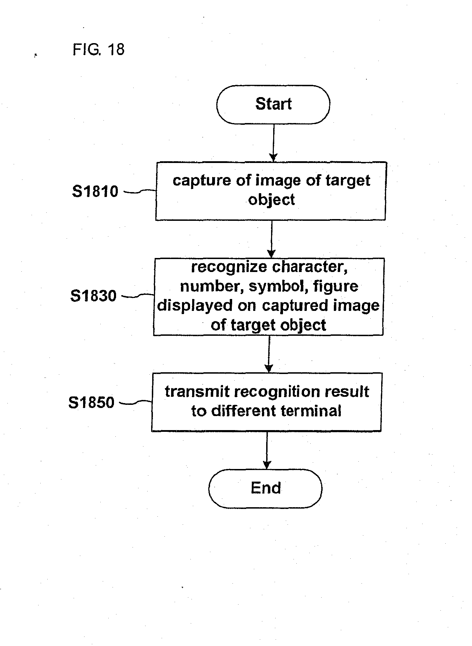

FIG. 18 is a flow chart illustrating a method for transmitting information according to another exemplary embodiment. Other embodiments, operations and configurations may also be provided.

As shown in FIG. 18, the mobile terminal 100 may capture an image of a target object (S1810).

The mobile terminal 100 may recognize a character, a number, a symbol, and/or a figure displayed on the captured image of the target object (S1830).

The mobile terminal may recognize the character, the number, the symbol, and/or the figure within the screen area inputted by the user or the screen area in which a character, a number, a symbol, and/or a figure is recognized according to results from a previous recognition.

The mobile terminal may transmit the recognition results to the different mobile terminal (S1850).

The mobile terminal 100 may display a message creation window, may include the recognized character, number, symbol, and/or figure in the message text (body) by using a keypad input, a touch input, or a gesture input, and may transmit the message to the different mobile terminal.

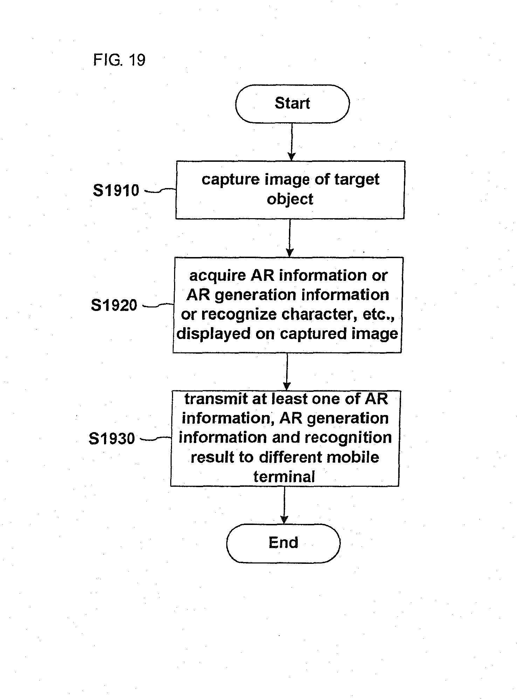

FIG. 19 is a flow chart illustrating a method for transmitting information according to another exemplary embodiment. Other embodiments, operations and configurations may also be provided.

As shown in FIG. 19, the mobile terminal 100 may capture an image of a target object (S1910).

The mobile terminal 100 may acquires AR information associated with the captured image of the target object or AR generation information used to access the AR information, and/or recognize a character, a number, a symbol, and/or a figure displayed in the captured image of the target object (S1920).

The mobile terminal 100 may acquire AR information and/or AR generation information, recognize the character displayed on the captured image of the target object, and/or acquire the AR information and/or AR generation information and recognize the character and/or the like displayed on the captured image of the target object.

Thereafter, the mobile terminal 100 may transmit at least one of the AR information, the AR generation information, and the recognition results to a different mobile terminal (S1930).

The mobile terminal 100 may transmit the AR information and/or AR generation information to the different mobile terminal, the character, and/or the like, displayed on the captured image of the target object to the different mobile terminal, and/or both the AR information and/or the AR generation information and the character displayed on the captured image of the target object to the different mobile terminal.

An embodiment may provide a method for displaying information and allowing a user to easily recognize his or her desired augmented reality (AR) information or effectively transfer information regarding an object the user is looking at or an object around him, a method for transmitting information, and/or a mobile terminal using the same.

According to an embodiment, a method may be provided for displaying information. The method may include displaying an object associated with augmented reality (AR) information, determining whether to display the AR information with respect to the object, and displaying (or not displaying) the AR information with respect to the object according to the determination.

According to an embodiment, a mobile terminal may be provided that includes: a display unit displaying an object associated with an augmented reality (AR) information, and a controller determining whether to display the AR information with respect to the object and displaying (or not displaying) the AR information with respect to the object according to the determination.

According to an embodiment, a method may be provided for transmitting information of a mobile terminal. The method may include capturing an image of a target object, acquiring augmented reality (AR) information associated with the target object whose image has been captured or AR generation information used to access the AR information, and transmitting the AR information or the AR generation information to a different mobile terminal.

According to an embodiment, a method may be provided for transmitting information of a mobile terminal. The method may include capturing an image of a target object, recognizing a character, a number, a symbol, or a figure displayed on the captured image of the target object, and transmitting the recognition result to a different mobile terminal.

According to an embodiment, a method may be provided for transmitting information of a mobile terminal. The method may include capturing an image of a target object, acquiring augmented reality (AR) information associated with the target object whose image has been captured or AR generation information used to access the AR information, or recognizing a character, a number, a symbol, or a figure displayed on the captured image of the target object, and transmitting at least one of the AR information, the AR generation information, and the recognition result to a different mobile terminal.

According to an embodiment, a mobile terminal may be provided that includes: a camera capturing an image of a target object, a controller acquiring augmented reality (AR) information associated with the target object whose image has been captured or AR generation information used to access the AR information, and a wireless communication unit transmitting the AR information or the AR generation information to a different mobile terminal.

According to an embodiment, a mobile terminal may be provided that includes a camera capturing an image of a target object, a controller recognizing a character, a number, a symbol, or a figure displayed on the captured image of the target object, and a wireless communication unit transmitting the recognition result to a different mobile terminal.

According to an embodiment, a mobile terminal may be provided that includes a camera capturing an image of a target object, a controller acquiring augmented reality (AR) information associated with the target object whose image has been captured or AR generation information used to access the AR information, or recognizing a character, a number, a symbol, or a figure displayed on the captured image of the target object, and a wireless communication unit transmitting at least one of the AR information, the AR generation information, and the recognition result to a different mobile terminal.

In a method for displaying information and a mobile terminal using the same when a plurality of types of AR information are displayed on a screen, the plurality of types of AR information are displayed (or not displayed) by object, screen area, and/or layer, so that a user can easily recognize only his or her desired information.

In a method for displaying information and a mobile terminal using the same, information about an object whose image is currently captured or has been captured by the mobile terminal can be transmitted in various forms such as text, an image, AR generation information, AR information, and the like, so the user can effectively transfer information regarding an object the user is looking at or an object around the user to a counterpart.

In embodiments, the above-described method can be implemented as codes that can be read by a computer in a program-recorded medium. The computer-readable medium includes various types of recording devices in which data read by a computer system is stored. The computer-readable medium may include a ROM, a RAM, a CD-ROM, a magnetic tape, a floppy disk, an optical data storage device, and/or the like. The computer-readable medium may also include implementations in the form of carrier waves or signals (e.g., transmission via the Internet).

Any reference in this specification to "one embodiment," "an embodiment," "example embodiment," etc., means that a particular feature, structure, or characteristic described in connection with the embodiment is included in at least one embodiment of the invention. The appearances of such phrases in various places in the specification are not necessarily all referring to the same embodiment. Further, when a particular feature, structure, or characteristic is described in connection with any embodiment, it is submitted that it is within the purview of one skilled in the art to affect such feature, structure, or characteristic in connection with other ones of the embodiments.

Although embodiments have been described with reference to a number of illustrative embodiments thereof, it should be understood that numerous other modifications and embodiments can be devised by those skilled in the art that will fall within the scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. A method for controlling information on a mobile terminal, the method comprising:
displaying an image on a display (151) of the mobile terminal, the image including at least one object;
receiving information regarding movement of a pointer with respect to the displayed image on the display;
obtaining augmented reality (AR) information regarding the object based on the received information regarding movement of the pointer; and
displaying the image and the augmented reality (AR) information related to the at least one object on the display of the mobile terminal.

2. The method of claim 1, wherein obtaining the AR information includes determining an area of the displayed image based on the movement of the pointer, and determining whether an object is provided within the determined area.

3. The method of claim 2, wherein obtaining the AR information further includes obtaining the AR information of the determined object when the object is determined to be provided within the determined area.

4. The method as claimed in any one of the preceding claims, wherein movement of the pointer includes movement of the pointer over a plurality of predetermined regions of the display and identifying the regions based on the movement of the pointer.

5. The method as claimed in any one of the preceding claims, wherein displaying the image and the AR information includes displaying the AR information such that the displayed AR information overlaps a front position of a portion of AR information of another object of the image.

6. The method as claimed in any one of the preceding claims, further comprising:
storing identification information regarding the object and information regarding whether to display the AR information,
wherein when the object is removed from the display and is again displayed on the display, the AR information regarding the object is displayed or is not displayed based on the stored identification information regarding the object and the stored information regarding whether to display the AR information.

7. The method as claimed in any one of the preceding claims, wherein obtaining the AR information includes obtaining location information of the mobile terminal, an access address to the AR information or identification information of an AR marker associated with the object.

8. The method as claimed in any one of the preceding claims, further comprising:
transmitting at least one of the image, the AR information and access address to the AR information or identification information of an AR marker associated with the object to another mobile terminal.

9. The method as claimed in any one of the preceding claims, the method comprising:
displaying an image on a display of the mobile terminal, the image including a first object, first augmented reality (AR) information associated with the first object, a second object and second AR information associated with the second object;
receiving information regarding movement of a pointer with respect to the displayed image on the display;
identify the AR information associated with the second object based on the received information regarding movement of the pointer; and
displaying, on the display of the mobile terminal, the image with the first object, the second object and the first AR information associated with the first object and without the AR information associated with the second object when the AR information associated with the second object is identified based on the received information regarding movement of the pointer.

10. A mobile terminal comprising:
a display (150) to display an image, the image including at least one object,
and
a controller adapted to receive information regarding a movement of a pointer with respect to the displayed image on the display, the controller is adapted to obtain augmented reality (AR) information regarding the object based on the received information regarding movement of the pointer, and the display is adapted to display the image and the augmented reality (AR) information related to the at least one object on the display.

11. The mobile terminal of claim 10, wherein the controller is adapted to obtain the AR information by determining an area of the displayed image based on the movement of the pointer, and by determining whether an object is provided within the determined area.

12. The mobile terminal of claim 11, wherein the controller is adapted to obtain the AR information by further obtaining the AR information of the determined object when the object is determined to be provided within the determined area.

13. The mobile terminal as claimed in any one of the claims 10 to 12, further comprising:
a memory (160) to store identification information regarding the object and information regarding whether to display the AR information,
wherein when the object is removed from the display (150) and is again displayed on the display, the controller is adapted to determine whether the AR information regarding the object is displayed or is not displayed based on the stored identification information regarding the object and the stored information regarding whether to display the AR information.

14. The mobile terminal as claimed in any one of the claims 10 to 13, further comprising:
a communication unit (110) adapted to transmit at least one of the image, the AR information and access address to the AR information of an AR marker associated with the object to another mobile terminal.

15. The mobile terminal as claimed in any one of the claims 10 to 12 comprising:
the display (151) to display an image, the displayed image includes a first object and a second object, the display as adapted to further display first augmented reality (AR) information associated with the first object, and second AR information associated with the second object; and
the controller (180) is adapted to receive information regarding a movement of a pointer with respect to the displayed image on the display (150), the controller is adapted to identify the second AR information associated with the second object based on the received information regarding the movement of the pointer, and the controller (180) is adapted to control the display (150) to display the image with the first object, the second object and the first AR information associated with the first object and without the second AR information associated with the second object when the second AR information associated with the second object is identified based on the received information regarding the movement of the pointer.
